# EUROPEAN PATENT APPLICATION

(11) **EP 4 674 711 A1**
(43) Date of publication of application: **07.01.2026**
(21) Application number: 25186980.6
(22) Date of filing: 02.07.2025
(51) Int. Cl.: B60T 17/02, B60T 17/22

(54) **COMPRESSED AIR DISTRIBUTION SYSTEMS, VEHICLES AND GROUP OF VEHICLES**

(30) Priority: 05.07.2024 IT 202400015568
(71) Applicant: Faiveley Transport Italia S.p.A., 10045 Piossasco (TO) (IT)
(72) Inventor: FREA, Matteo, 10060 Cantalupa (Torino) (IT); BOUTEILLE, Jean-Philippe, 60150 Le Plessis-Brion (FR)
(74) Representative: Cristinelli, Luca

(57) **Abstract**

A compressed air distribution system (200) for a vehicle is described. The compressed air distribution system (200) comprises at least:
- a first reservoir (206) arranged to contain compressed air to be supplied to first braking means (202), wherein said first braking means (202) are arranged to apply a first braking force by means of the compressed air received from the first reservoir (206);
- a second reservoir (208) arranged to contain compressed air to be supplied to second braking means (204), wherein said second braking means (204) are arranged to apply a second braking force by means of said compressed air received from the second reservoir (208);
- a first compressor (210) arranged to generate compressed air to be stored in the first reservoir (206);
- a second compressor (212) arranged to generate compressed air to be stored in the second reservoir (208). A vehicle and a group of vehicles are also described.

## Description

### Technical field

The present invention generally relates to the field of vehicles. More specifically, the invention relates to compressed air distribution systems for a vehicle, particularly a railway vehicle, to vehicles and to a group of vehicles connected to one another to form, for example, a convoy of vehicles, particularly a railway convoy.

### Prior art

Hereinafter, the prior art is described with particular reference to the field of railway vehicles, however, what is described can also find similar application for vehicles of other sectors.

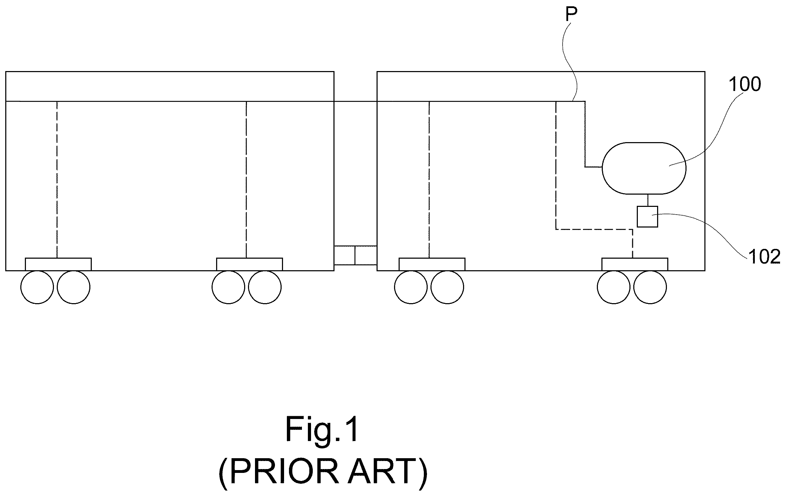

As illustrated for example in Figure 1, railway vehicles can be connected to one another to form a railway convoy.

Each railway vehicle can be a locomotive (for example, a head vehicle or an end vehicle) or an intermediate/following vehicle connected to the locomotive and adapted to be moved by said locomotive.

A railway convoy can also comprise more than one locomotive and more than one intermediate/following vehicle.

The braking systems and the suspension systems for railway vehicles are generally supplied with compressed air.

A system for generating compressed air for a train or railway convoy according to the prior art is illustrated in Figure 1.

The system for generating compressed air of the locomotive comprises a compressor 102 arranged to draw air at atmospheric pressure, compress it and, through a pneumatic connection, supply said compressed air to a main reservoir 100 of the locomotive adapted to contain a predetermined volume of air.

Through a distribution pipe P, the compressed air stored in the reservoir 100 can be supplied to at least one user system, such as for example, the braking system, the suspension system, the toilets, the pantographs and the doors of the locomotive and/or of any further following/intermediate vehicles connected to the locomotive.

Disadvantageously, since the reservoir 100 must contain a predetermined volume of air sufficient to serve all the vehicles (locomotive and any further following/intermediate vehicles connected to it) the size of the reservoir 100 must be large.

In certain conditions it may be required to accumulate in the reservoir the quantity of air in a reduced unit of time. Being the size of the reservoir 100 large, the power and the size of the compressor 102 of the locomotive must also be large. In other words, in order to have the quantity of compressed air, in the unit of time, required by the system in certain conditions (start-up of the train in the morning, refilling reservoirs after braking or emergency double braking, etc.), the compressor must have an extremely high flow rate, which makes it inefficient in other standard operating situations wherein the use is extremely reduced. This aspect negatively affects the reliability and wear of the system.

Moreover, it is known that compressors suitably sized for such applications of compressed air generation are a source of high vibrations and high noise. Disadvantageously, such noise can be perceived in the surrounding environment, for example in large stations with many passengers, stations located in inhabited centres, etc.

A further drawback of known solutions, which comprise a main reservoir and the compressor 102 only in the locomotive, concerns the use of long pipes to convey the compressed air between the reservoir and the various recipient systems of the compressed air installed in the various vehicles (locomotive and following/intermediate vehicles connected to it). Such pipes can also provide for the need to implement pipe crossings between one carriage and another of a group of vehicles connected to one another.

### Summary of the invention

An object of the present invention is to provide a solution for the generation of compressed air of a vehicle, which allows to increase the utilisation rate of the compressor, reduce the vibrations and the noise generated overall with respect to the known systems for the generation of compressed air, while maintaining the filling capacity of the system unchanged or improving it.

A further object concerns the elimination of most of the pipes provided to convey the compressed air and the elimination of any pipe crossings between one carriage and another.

A still further object concerns the increase of the degree of reliability of the system with respect to the systems of the prior art.

The above and other objects and advantages are achieved:
- according to a first aspect of the invention, by a compressed air distribution system for a vehicle having the features defined in claim 1;
- according to a second aspect of the invention, by a compressed air distribution system for a vehicle having the features defined in claim 5;
- according to a third aspect of the invention, by a compressed air distribution system for a vehicle having the features defined in claim 7;
- according to a fourth aspect of the invention, by vehicles having the features respectively defined in claims 11, 12 and 13; and
- according to a fifth aspect of the invention, by a group of vehicles having the features defined in claim 14.

In summary, the present invention, thanks to the proximity between the compressor and the reservoir, makes it possible to eliminate the pipes and to eliminate any pipe crossings between one carriage and another.

Since there is no need for a very large-sized compressor, through the present invention, the market of "consumer" compressors is opened, with all the consequent economic advantages and availability of components.

Moreover, since the system comprises many compressors, the degree of reliability required of the individual compressor is reduced, since it is possible to guarantee the necessary performance and therefore the service even in degraded conditions.

Preferred embodiments of the invention are defined in the dependent claims, the content of which is to be understood as an integral part of the present description.

### Brief description of the drawings

The functional and structural features of some preferred embodiments of compressed air distribution systems for a vehicle, of vehicles and of a group of vehicles according to the invention will now be described. Reference is made to the accompanying drawings, in which:
- Figure 1 illustrates an exemplary system for generating compressed air according to the prior art;
- Figure 2 illustrates one embodiment of a compressed air distribution system according to the present invention;
- Figure 3 illustrates a further embodiment of a compressed air distribution system according to the present invention;
- Figure 4 illustrates a further embodiment of a compressed air distribution system according to the present invention; and
- Figure 5 illustrates a further embodiment of a compressed air distribution system according to the present invention.

### Detailed description

Before explaining in detail a plurality of embodiments of the invention, it should be clarified that the invention is not limited in its application to the construction details and the configuration of the components presented in the following description or illustrated in the drawings. The invention is capable of assuming other embodiments and of being implemented or made practically in different ways. It should also be understood that the phraseology and terminology have a descriptive purpose and should not be construed as limiting. The use of "including" and "comprising" and their variations are to be understood as encompassing the elements stated below and their equivalents, as well as additional elements and their equivalents.

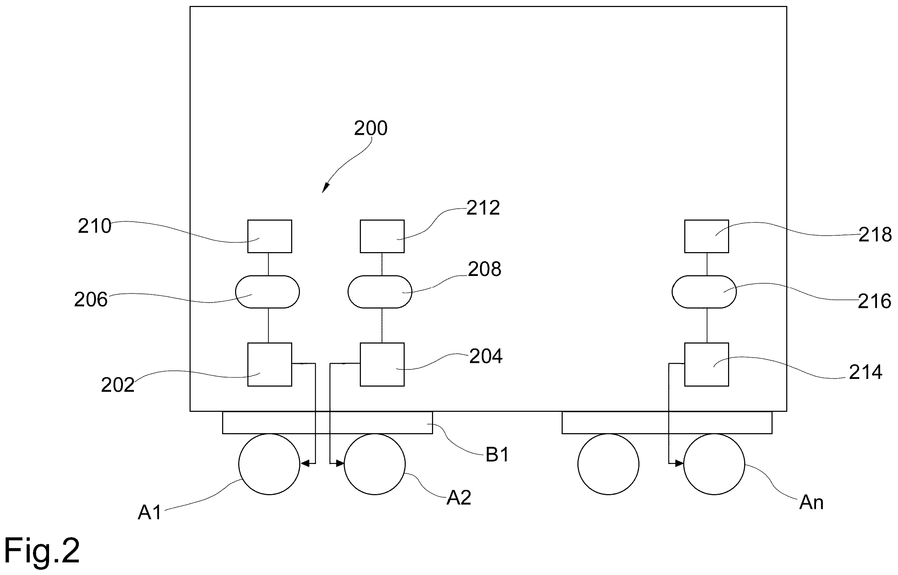

Hereinafter, with exemplary reference to Figure 2, a first embodiment of a compressed air distribution system for a vehicle, particularly a railway vehicle, according to the present invention is described.

As observable in said Figure 2, the vehicle comprises at least:
- a first axle A1 to which at least one first wheel is coupled and a second axle A2 to which at least one second wheel is coupled;
- first braking means 202 arranged to apply a first braking force on the first axle A1 or on the at least one first wheel coupled to said first axle A1 or on a first organ coupled to said first axle A1 or coupled to said at least one first wheel coupled to said first axle A1; and
- second braking means 204 arranged to apply a second braking force on the second axle A2 or on the at least one second wheel coupled to said second axle A2 or on a second organ coupled to said second axle A2 or coupled to said at least one second wheel coupled to said second axle A2.

By way of example, the first organ (braking) and/or the second organ (braking) may each be or comprise a brake disc arranged to be coupled to an axle or to a wheel.

As observable in Figure 2, the compressed air distribution system 200 comprises at least:
- a first reservoir 206 arranged to contain compressed air to be supplied to the first braking means 202;
- a second reservoir 208 arranged to contain compressed air to be supplied to the second braking means 204.

In this case, the first braking means 202 are arranged to apply said first braking force by means of the compressed air received from the first reservoir 206 and the second braking means 204 are arranged to apply said second braking force by means of said compressed air received from the second reservoir 208.

By way of non-limiting example, the first braking means and/or the second braking means may each be a braking system, a braking device, a braking assembly, a brake. By way of non-limiting example, the first braking means and/or the second braking means may each be or comprise at least one brake cylinder arranged to receive compressed air, at least one compressed air control valve, at least one braking application means. For example, the braking application means may be or comprise a brake shoe and one or more levers.

As observable in Figure 2, the compressed air distribution system 200 comprises at least:
- a first compressor 210 arranged to generate compressed air to be stored in the first reservoir 206; and
- a second compressor 212 arranged to generate compressed air to be stored in the second reservoir 208.

As observable in Figure 2, the first axle A1 may be comprised in a first bogie B1 of the vehicle and the second axle A2 may also be comprised in said first bogie B1 of the vehicle.

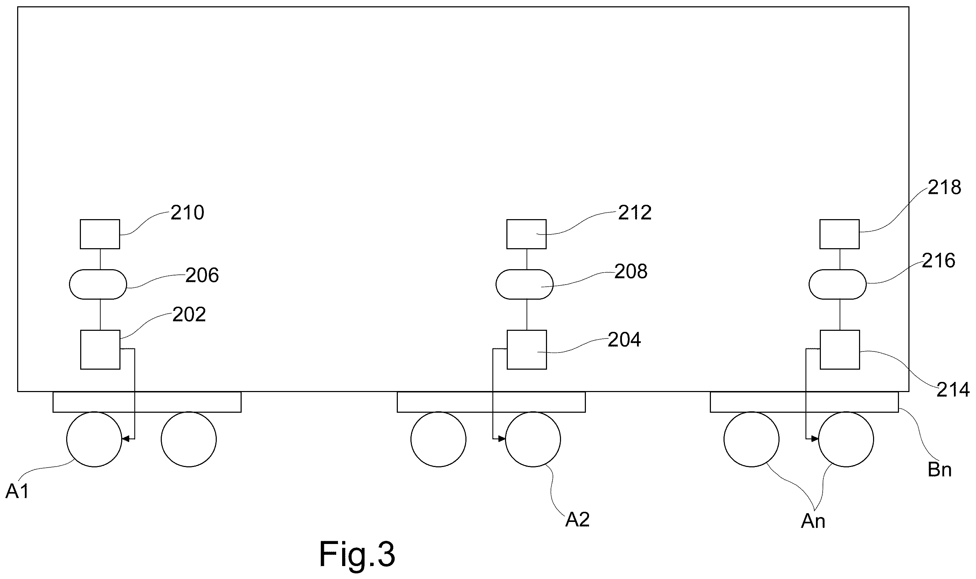

In an alternative embodiment, as observable for example in Figure 3, the first axle A1 may be comprised in a first bogie B1 of the vehicle and the second axle A2 may be comprised in a second bogie B2 of the vehicle.

As observable for example in Figure 2 and in Figure 3, the vehicle may comprise, in addition to the first axle A1 and the second axle A2, at least one further axle An to which at least one respective further wheel is coupled.

For each further axle An, the vehicle may comprise respective further braking means 214 arranged to apply a further braking force on a respective further axle An or on at least one further wheel coupled to a respective further axle An or on a further organ coupled to a respective further axle An or coupled to a further wheel coupled to a respective further axle An.

In this case, the compressed air distribution system 200 may comprise, for each respective further axle An:
- a respective further reservoir 216 arranged to contain compressed air to be supplied to the respective further braking means 214 arranged to apply said further braking force by means of said compressed air received from the respective further reservoir 216;
- a respective further compressor 218 arranged to generate compressed air to be stored in the respective further reservoir 216.

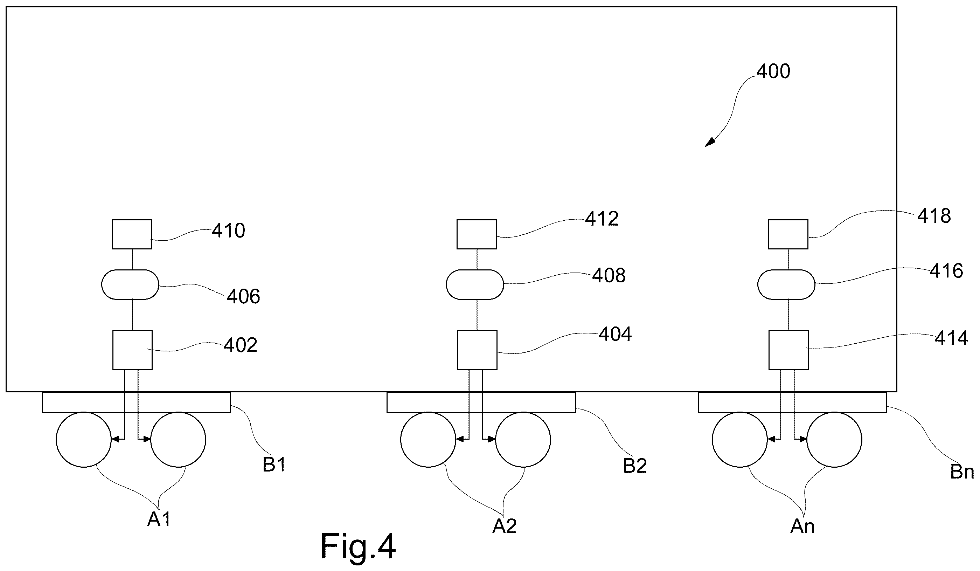

Hereinafter, with exemplary reference to Figure 4, a further embodiment of a compressed air distribution system 400 for a vehicle, particularly a railway vehicle, is illustrated.

As observable for example in Figure 4, the vehicle comprises at least:
- a first bogie B1 comprising a plurality of first axles A1 to which respective wheels are coupled and a second bogie B2 comprising a plurality of second axles A2 to which respective wheels are coupled;
- first braking means 402 arranged to apply a first braking force on the plurality of first axles A1 of the first bogie B1 or on the wheels coupled to the plurality of first axles A1 of the first bogie B1 or on a plurality of first organs respectively coupled to said plurality of first axles A1 or respectively coupled to said wheels of said plurality of first axles A1; and
- second braking means 404 arranged to apply a second braking force on the plurality of second axles of the second bogie or on the wheels coupled to the plurality of second axles of the second bogie or on a plurality of second organs respectively coupled to said plurality of second axles A2 or respectively coupled to said wheels of said plurality of second axles A2.

As observable in Figure 4, the compressed air distribution system 400 comprises at least:
- a first reservoir 406 arranged to contain compressed air to be supplied to the first braking means 402;
- a second reservoir 408 arranged to contain compressed air to be supplied to the second braking means 404.

In this case, the first braking means 402 are arranged to apply said first braking force by means of said compressed air received from the first reservoir 406 and the second braking means 404 are arranged to apply said second braking force by means of said compressed air received from the second reservoir 408.

The compressed air distribution system 400 further comprises at least:
- a first compressor 410 arranged to generate compressed air to be stored in the first reservoir 406 and a second compressor 412 arranged to generate compressed air to be stored in the second reservoir 408.

As observable again in Figure 4, the vehicle may comprise, in addition to the first bogie B1 and the second bogie B2, at least one further bogie Bn comprising a plurality of further axles An into which respective wheels are coupled.

For each further bogie Bn, the vehicle may comprise respective further braking means 414 arranged to apply a respective further braking force on the plurality of further axles An of a respective further bogie Bn or on the wheels coupled to the plurality of further axles An of a respective further bogie Bn or on a plurality of further organs respectively coupled to said plurality of further axles An or respectively coupled to said wheels of said plurality of further axles An.

In this case, the compressed air distribution system 400 may comprise, for each respective further bogie Bn:
- at least one respective further reservoir 416 arranged to contain compressed air to be supplied to the respective further braking means 414 arranged to apply said respective further braking force by means of said compressed air received from the respective further reservoir 416; and
- a respective further compressor 418 arranged to generate compressed air to be stored in the at least one respective further reservoir 416.

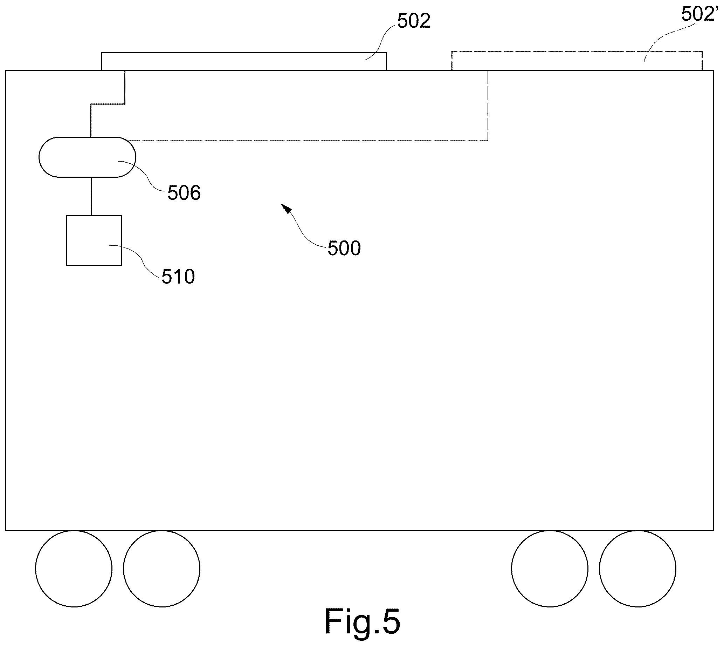

Hereinafter, with exemplary reference to Figure 5, a further embodiment of a compressed air distribution system 500 for a vehicle, particularly a railway vehicle, is illustrated.

As observable in Figure 5, the vehicle comprises at least:
- at least one air generation treatment unit 502, AGTU (also known as "Air Generation Treatment Unit"), arranged to treat air solely intended for a braking system of the vehicle and/or at least one pneumatic system of the vehicle;
- a reservoir 506 arranged to contain compressed air to be supplied to said air generation treatment unit of the vehicle; and
- at least one first compressor 510 arranged to generate compressed air to be stored in the reservoir 506.

Preferably, the compressed air distribution system 500 may comprise at least one second compressor arranged to generate compressed air to be stored in said reservoir (506). Preferably, the pneumatic system of the vehicle may be at least one of:
- an opening and closing system of at least one door of the vehicle;
- a pneumatic suspension system of the vehicle;
- a toilet system of the vehicle;
- a handling system of at least one pantograph of the vehicle.

Preferably, the vehicle may comprise a plurality of air generation treatment units 502, 502' arranged to treat air solely intended for a braking system of the vehicle and/or at least one pneumatic system of said vehicle.

In this case, the reservoir 506 may be arranged to contain compressed air to be supplied to said plurality of air generation treatment units of the vehicle.

Thanks to the fact that the air generation treatment unit 502 is arranged to treat air solely intended for a braking system of the vehicle and/or at least one pneumatic system of the vehicle, the size of the air generation treatment unit 502 may be smaller than the air generation treatment unit used in the prior art, which is arranged to treat compressed air also for all the possible vehicles of the group of vehicles/convoy of vehicles.

In a further embodiment not illustrated in the figures, in the case of a group of vehicles connected to one another, a respective compressed air distribution system 500 may be installed on each vehicle. In other words, each vehicle may comprise:
- at least one respective air generation treatment unit, AGTU (also known as "Air Generation Treatment Unit"), arranged to treat air solely intended for a braking system of said vehicle and/or at least one pneumatic system of said vehicle;
- a respective reservoir arranged to contain compressed air to be supplied to said air generation treatment unit of said vehicle; and
- at least one compressor arranged to generate compressed air to be stored in the respective reservoir of said vehicle.

In a further aspect, the present invention concerns a vehicle.

In a first embodiment, the vehicle comprises at least:
- a first axle A1 to which at least one first wheel is coupled and a second axle A2 to which at least one second wheel is coupled;
- first braking means 202 arranged to apply a braking force on the first axle A1 or on the at least one first wheel coupled to said first axle A1 or on a first organ coupled to said first axle A1 or coupled to said at least one first wheel coupled to said first axle A1; and
- second braking means 204 arranged to apply a braking force on the second axle A2 or on the at least one second wheel coupled to said second axle A2 or on a second organ coupled to said second axle A2 or coupled to said at least one second wheel coupled to said second axle A2.

The vehicle comprises a compressed air distribution system 200 for a vehicle according to any one of the previous embodiments described for example with reference to Figures 2 and 3.

In a second embodiment, the vehicle comprises at least:
- a first bogie B1 comprising a plurality of first axles A1 to which respective wheels are coupled and a second bogie B2 comprising a plurality of second axles A2 to which respective wheels are coupled;
- first braking means 402 arranged to apply a braking force on the plurality of first axles A1 of the first bogie B1 or on the wheels coupled to the plurality of first axles A1 of the first bogie B1 or on a plurality of first organs respectively coupled to said plurality of first axles A1 of the first bogie B1 or respectively coupled to said wheels of said plurality of first axles A1 of the first bogie B1;
- second braking means 404 arranged to apply a braking force on the plurality of second axles of the second bogie or on the wheels coupled to the plurality of second axles of the second bogie or on a plurality of second organs respectively coupled to said plurality of second axles A2 of the second bogie B2 or respectively coupled to said wheels of said plurality of second axles A2 of the second bogie B2.

The vehicle further comprises a compressed air distribution system 400 for a vehicle according to any one of the previous embodiments described for example with reference to Figure 4.

In a third embodiment, the vehicle comprises at least:
- an air generation treatment unit; and
- a compressed air distribution system 500 according to any one of the previous embodiments described for example with reference to Figure 5.

In a further aspect, the present invention concerns a group of vehicles, particularly a railway convoy.

The group of vehicles comprises a plurality of vehicles according to any one of the embodiments described above.

The vehicles of the group of vehicles are connected to one another. For example, the vehicles may be connected by means of couplers.

What has been described above for at least one vehicle, particularly a railway vehicle, can be similarly applied to a plurality of vehicles connected to one another to form a railway convoy or a group of interconnected vehicles.

As described above, the present invention is preferably applicable to at least one railway vehicle, travelling on railway tracks. For example, a vehicle according to the present disclosure may be a locomotive, and a route or part thereof may include rails on which the wheels of the locomotive roll. The embodiments described herein are not to be construed as limited to rail vehicles. For example, the vehicle may be a car, a truck (for example, a highway semi-trailer, a mining truck, a timber transport truck or the like), a motorcycle or the like, and the route may be a road or a path.

Advantageously, compared to the solutions of the prior art which require the presence of a compressor having large size and high power, the solutions proposed in the present description provide solutions having a distributed architecture which can be based on compressors provided with lower power and lower weight compressors compared to the prior art. In this way, it is possible to mitigate, or completely reduce, the drawbacks of the prior art described above.

Several aspects and embodiments of compressed air distribution systems for a vehicle, of vehicles and of a group of vehicles according to the invention have been described. It is understood that each embodiment can be combined with any other embodiment. The invention is furthermore not limited to the described embodiments, but may be varied within the scope defined by the appended claims.

## Claims

1. Compressed air distribution system (200) for a vehicle, particularly a railway vehicle, wherein said vehicle comprises at least:
- a first axle (A1) to which at least one first wheel is coupled and a second axle (A2) to which at least one second wheel is coupled;
- first braking means (202) arranged to apply a first braking force on the first axle (A1) or on the at least one first wheel coupled to said first axle (A1) or on a first organ coupled to said first axle (A1) or coupled to said at least one first wheel coupled to said first axle (A1);
- second braking means (204) arranged to apply a second braking force on the second axle (A2) or on the at least one second wheel coupled to said second axle (A2) or on a second organ coupled to said second axle (A2) or coupled to said at least one second wheel coupled to said second axle (A2);
the compressed air distribution system (200) comprising at least:
- a first reservoir (206) arranged to contain compressed air to be supplied to said first braking means (202), wherein said first braking means (202) are arranged to apply said first braking force by means of compressed air received from said first reservoir (206);
- a second reservoir (208) arranged to contain compressed air to be supplied to said second braking means (204), wherein said second braking means (204) are arranged to apply said second braking force by means of said compressed air received from said second reservoir (208);
- a first compressor (210) arranged to generate compressed air to be stored in the first reservoir (206);
- a second compressor (212) arranged to generate compressed air to be stored in the second reservoir (208).

2. System according to claim 1, wherein said first axle (A1) is comprised in a first bogie (B1) of the vehicle and said second axle (A2) is also comprised in said first bogie (B1) of the vehicle.

3. System according to claim 1, wherein said first axle (A1) is comprised in a first bogie (B1) of the vehicle and said second axle (A2) is comprised in a second bogie (B2) of the vehicle.

4. System according to any of the preceding claims, wherein said vehicle comprises:
- at least one further axle (An) to which is coupled at least one respective further wheel;
- for each respective further axle (An), respective further braking means (214) arranged to apply a further braking force to a respective further axle (An) or to at least one further wheel coupled to a respective further axle (An) or to a further organ coupled to a respective further axle (An) or coupled to a further wheel coupled to a respective further axle (An);
the compressed air distribution system (200) comprising, for each respective further axle (An):
- a respective further reservoir (216) arranged to contain compressed air to be supplied to the respective further braking means (214) arranged to apply said further braking force by means of said compressed air received from the respective further reservoir (216);
- a respective further compressor (218) arranged to generate compressed air to be stored in the respective further reservoir (216).

5. Compressed air distribution system (400) for a vehicle, particularly a railway vehicle, wherein said vehicle comprises at least:
- a first bogie (B1) comprising a plurality of first axles (A1) to which respective wheels are coupled, and a second bogie (B2) comprising a plurality of second axles (A2) to which respective wheels are coupled;
- first braking means (402) arranged to apply a first braking force on the plurality of first axles (A1) of the first bogie (B1) or on the wheels coupled to the plurality of first axles (A1) of the first bogie (B 1) or on a plurality of first organs respectively coupled to said plurality of first axles (A1) or respectively coupled to said wheels of said plurality of first axles (A1);
- second braking means (404) arranged to apply a second braking force on the plurality of second axles of the second bogie or on wheels coupled to the plurality of second axles of the second bogie or on a plurality of second organs respectively coupled to said plurality of second axles (A2) or respectively coupled to said wheels of said plurality of second axles (A2);
the compressed air distribution system (400) comprising at least:
- a first reservoir (406) arranged to contain compressed air to be supplied to said first braking means (402), wherein said first braking means (402) are arranged to apply said first braking force by means of said compressed air received from said first reservoir (406);
- a second reservoir (408) arranged to contain compressed air to be supplied to the second braking means (404), wherein said second braking means (404) are arranged to apply said second braking force by means of said compressed air received from the second reservoir (408);
- a first compressor (410) arranged to generate compressed air to be stored in the first reservoir (406);
- a second compressor (412) arranged to generate compressed air to be stored in the second reservoir (408).

6. System according to claim 5, wherein said vehicle comprises:
- at least one further bogie (Bn) comprising a plurality of further axles (An) to which respective wheels are coupled;
- for each further bogie (Bn), respective further braking means (414) arranged to apply a respective further braking force on the plurality of further axles (An) of a respective further bogie (Bn) or on wheels coupled to the plurality of further axles (An) of a respective further bogie (Bn) or on a plurality of further organs respectively coupled to said plurality of further axles (An) of a respective further bogie (Bn) or respectively coupled to said wheels of said plurality of further axles (An) of a respective further bogie (Bn);
the compressed air distribution system (400) comprising, for each respective further bogie (Bn):
- at least one respective further reservoir (416) arranged to contain compressed air to be supplied to the respective further braking means (414) arranged to apply said respective further braking force by means of said compressed air received from the respective further reservoir (416);
- a respective further compressor (418) arranged to generate compressed air to be stored in the at least one respective further reservoir (416).

7. Compressed air distribution system (500) for a vehicle, particularly a railway vehicle, wherein said vehicle comprises:
- at least one air generation treatment unit (502) arranged to treat air solely intended for a braking system of the vehicle and/or at least one pneumatic system of the vehicle;
- a reservoir (506) arranged to contain compressed air to be supplied to said at least one air generation treatment unit of the vehicle;
- at least one first compressor (510) arranged to generate compressed air to be stored in the reservoir (506).

8. Compressed air distribution system (500) according to claim 7, comprising:
- at least a second compressor arranged to generate compressed air to be stored in said reservoir (506).

9. Compressed air distribution system (500) according to claim 7 or 8, wherein said pneumatic system of the vehicle is at least one of:
- an opening and closing system of at least one door of the vehicle;
- a pneumatic suspension system of the vehicle;
- a toilet system of the vehicle,
- a handling system of at least one pantograph of the vehicle.

10. Compressed air distribution system (500) according to any one of claims 7 to 9, wherein said vehicle comprises a plurality of air generation treatment units (502, 502') arranged to treat air solely intended for a braking system of the vehicle and/or at least one pneumatic system of the said vehicle;
wherein said reservoir (506) is arranged to contain compressed air to be supplied to said plurality of air generation treatment units of the vehicle.

11. Vehicle, particularly a railway vehicle, comprising at least:
- a first axle (A1) to which is coupled at least one first wheel and a second axle (A2) to which is coupled at least one second wheel;
- first braking means (202) arranged to apply a braking force on the first axle (A1) or on the at least one first wheel coupled to said first axle (A1) or on a first organ coupled to said first axle (A1) or coupled to said first wheel coupled to said first axle (A1);
- second braking means (204) arranged to apply a braking force on the second axle (A2) or on the at least one second wheel coupled to said second axle (A2) or on a second organ coupled to said second axle (A2) or coupled to said second wheel coupled to said second axle (A2);
- a compressed air distribution system (200) for a vehicle according to any one of claims 1 to 4.

12. Vehicle, particularly a railway vehicle, comprising at least:
- a first bogie (B1) comprising a plurality of first axles (A1) to which respective wheels are coupled and a second bogie (B2) comprising a plurality of second axles (A2) to which respective wheels are coupled;
- first braking means (402) arranged to apply a braking force on the plurality of first axles (A1) of the first bogie (B1) or on the wheels coupled to the plurality of first axles (A1) of the first bogie (B1) or on a plurality of first organs respectively coupled to said plurality of first axles (A1) or respectively coupled to said wheels of said plurality of first axles (A1);
- second braking means (404) arranged to apply a braking force on the plurality of second axles of the second bogie or on wheels coupled to the plurality of second axles of the second bogie or on a plurality of second organs respectively coupled to said plurality of second axles (A2) or respectively coupled to said wheels of said plurality of second axles (A2);
- a compressed air distribution system (400) for a vehicle according to any one of claims 5 or 6.

13. Vehicle, particularly a railway vehicle, comprising at least:
- at least one air generation treatment unit arranged to treat air solely intended for a braking system of the vehicle and/or at least one pneumatic system of the vehicle;
- a compressed air distribution system (500) for a vehicle according to any one of claims 7 to 10.

14. A group of vehicles, particularly a railway convoy, comprising a plurality of vehicles according to any one of claims 11 to 13;
wherein said vehicles are connected to each other.
